# EUROPÄISCHE PATENTANMELDUNG

(11) **EP 1 292 174 A2**
(43) Veröffentlichungstag der Anmeldung: **12.03.2003**
(21) Anmeldenummer: 02018145.9
(22) Anmeldetag: 18.08.2002
(51) Int. Cl.: H05B 33/08

(54) **Elektronisches Vorschaltgerät (mit Diagnoseschaltung)**

(30) Priorität: 27.08.2001 DE 20114131 U
(71) Anmelder: FER Fahrzeugelektrik GmbH, 99819 Eisenach (DE)
(72) Erfinder: Tietze, Martin, 99817 Eisenach (DE)
(74) Vertreter: Strasser, Wolfgang, Dipl.-Phys.

(57) **Zusammenfassung**

Ein elektronisches Vorschaltgerät zur Erzeugung der für die Versorgung einer Elektrolumineszenz-Leuchteinrichtung erforderlichen Wechselspannung aus einer Versorgungs-Gleichspannung, insbesondere zur Beleuchtung eines Kraftfahrzeug-Kennzeichenschildes, ist dadurch gekennzeichnet, daß es eine Diagnoseschaltung (11) unmfaßt, die wenigstens einen Diagnoseausgang (25) besitzt, an dem sie ein den momentanen Betiebszustand der Elektrolumineszenz-Leuchteinrichtung kennzeichnendes Diagnosesignal für eine weitere Verarbeitung zur Verfügung stellt.

## Beschreibung

Die Erfindung betrifft ein elektronisches Vorschaltgerät der im Oberbegriff von Anspruch 1 genannten Art.

Aus dem Deutschen Gebrauchsmuster 297 12 954.6 ist es bekannt, ein Kennzeichenschild für ein Kraftfahrzeug dadurch aktiv zu beleuchten, daß eine im Bereich der Kennzeichnung angeordnete Elektrolumineszenz-Leuchteinrichtung verwendet wird, die dadurch zum Leuchten gebracht werden kann, daß an sie eine mit Hilfe eines Vorschaltgerätes aus der Bordnetz-Gleichspannung des Kraftfahrzeuges erzeugte Wechselspannung angelegt wird.

Für einen derartigen Einsatzzweck können auch andere, d.h. nicht in Form einer flexiblen Folie ausgebildete Elektrolumineszenz-Leuchteinrichtungen verwendet werden.

Gemeinsam ist allen solchen Elektrolumineszenzanordnungen, daß sie einen Flachkondensator umfassen, der aus einer Folge von sehr dünnen Schichten besteht, die durch dem Fachmann bekannte Verfahren auf die unterschiedlichsten Substrate aufgebracht werden können, die sowohl steif als auch flexibel sein und aus elektrisch leitenden oder nicht leitenden Materialien bestehen können. In allgemeinen umfaß der Flachkondensator vier einander sandwichartig überlagernde Schichten, von denen die "unterste" und die "oberste" elektrisch leitend sind und die Elektroden des Kondensators bilden, die im folgenden als Basis- bzw. Deckelektrode bezeichnet werden. Zwischen diese Elektroden sind eine Pigmentschicht und eine Isolationsschicht angeordnet, die das Dielektrikum des Flachkondensators bilden. Wird an die Elektroden eines solchen Flachkondensators eine Wechselspannung geeigneter Frequenz und Amplitude angelegt, so leuchten die dotierten Pigmente der Pigmentschicht in der ihnen eigenen Farbe. Ist das Substrat elektrisch leitend, so kann es als unmittelbar als Basiselektrode Verwendung finden. Zumindest eine der beiden Elektroden muß für das von der Pigmentschicht ausgehende Licht transparent sein, damit dieses von außen her wahrgenommen werden kann.

Sowohl aufgrund von sicherheitstechnischen als auch von logistischen Erfordernissen ist es wünschenswert, bei Verwendung einer solchen Anordnung im eingeschalteten Zustand Informationen über den momentanen Betriebszustand des Vorschaltgerätes und der mit ihm verbundenen Elektrolumineszenz-Leuchteinrichtung zu erhalten.

Somit liegt der Erfindung die Aufgabe zugrunde, ein Vorschaltgerät der eingangs genannten Art so weiterzubilden, daß es derartige Informationen liefern kann.

Zur Lösung dieser Aufgabe sieht die Erfindung die im Anspruch 1 niedergelegten Merkmale vor.

Dadurch, daß einem herkömmlichen Vorschaltgerät eine Diagnoseschaltung hinzugefügt wird, die zwischen dem regulären Betrieb und einem oder mehreren Störfällen unterscheiden und dementsprechend ein oder mehrere Diagnosesignale an die zentrale elektronische Steuerung des Bordnetzes oder an einen externen, zugeschalteten Diagnosecomputer abgeben kann, wird eine erhöhte Betriebssicherheit sowie eine Verbesserung logistischer Abläufe erzielt.

Gibt zum Beispiel die Diagnoseschaltung ein Diagnosesignal ab, das anzeigt, daß im Stromkreis der Elektrolumineszenz-Leuchteinrichtung eine Unterbrechung oder ein Kurzschluß vorliegt, sodaß die Elektrolumineszenz-Leuchteinrichtung nicht mehr leuchtet, so kann die Kraftfahrzeug-Steuerelektronik die Stromversorgung für die Elektrolumineszenz-Leuchteinrichtung ab- und stattdessen für eine mit regulären Leuchten erfolgende Notbeleuchtung des Kraftfahrzeug-Kennzeichenschildes einschalten, um weiterhin eine gute Sichtbarkeit des Kennzeichenschildes und damit des gesamten Kraftfahrzeuges zu gewährleisten.

In logistischer Hinsicht ergibt sich der Vorteil, daß Kraftfahrzeuge zunächst wahlweise mit einem Kennzeichenschild mit Elektrolumineszenz-Leuchteinrichtung oder mit herkömmlicher Beleuchtung ausgestattet und später jederzeit umgerüstet werden können.

Dabei ist besonders bevorzugt, daß das Aktivieren der Elektrolumineszenz-Leuchteinrichtung nicht durch direktes Schalten des Laststroms sondern mit Hilfe eines Steuersignals erfolgt, das an einen steuerbaren elektronischen Schalter angelegt wird, während das Vorschaltgerät selbst dauerhaft mit der Bordspannung verbunden ist.

Dies bietet den Vorteil, aus der Kombination des momentanen Wertes des Steuersignals und eines einzigen von der Diagnoseschaltung abgegebenen Diagnosesignals weitgehende Rückschlüsse über den momentanen Betriebszustand ziehen zu können.

Diese und weitere vorteilhafte Eigenschaften und Merkmale eines erfindungsgemäßen Vorschaltgerätes sind in den Unteransprüchen niedergelegt.

Die Erfindung wird im folgenden anhand eines Ausführungsbeispiels unter Bezugnahme auf die Zeichnung beschrieben. In dieser zeigt die einzige Figur eine bevorzugte Ausführungsform eines erfindungsgemäßen Vorschaltgerätes mit Diagnoseschaltung.

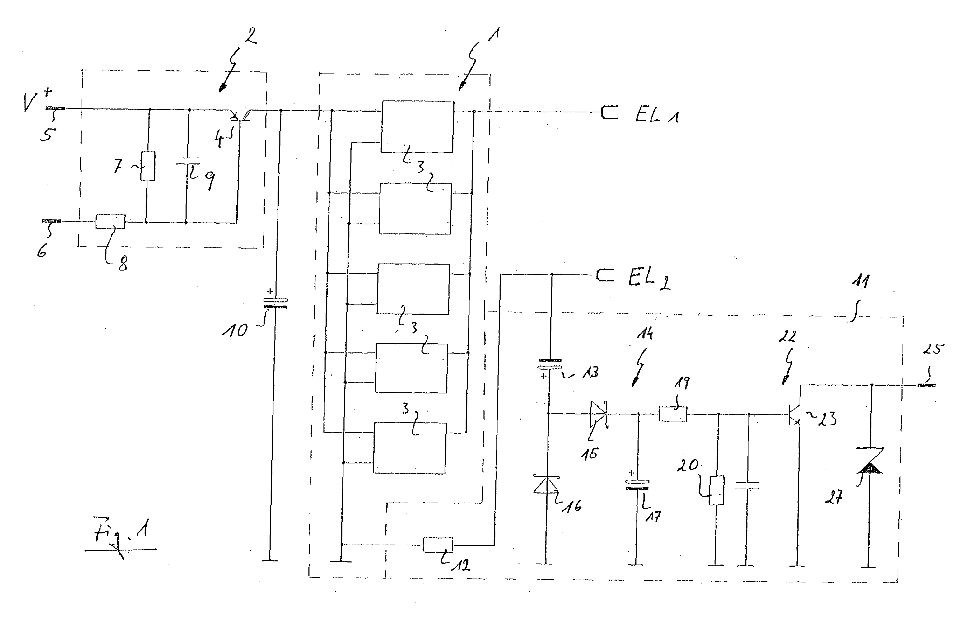

Das in Figur 1 gezeigte elektronische Vorschaltgerät umfaßt eine Inverter- oder Zerhackerschaltung 1, der über einen steuerbaren elektronischen Schalter 2 eine Versorgungsgleichspannung V⁺ zuführbar ist. Im eingeschalteten Zustand erzeugt die Zerhackerschaltung 1 aus dieser Gleichspannung eine Wechselspannung, wie sie für den Betrieb einer mit den Anschlüssen EL₁ und EL₂ verbundenen (nicht dargestellten) Elektrolumineszenz-Leuchteinrichtung erforderlich ist.

Wie man der Figur entnimmt, besteht die Zerhackerschaltung 1 aus fünf zueinander parallel geschalteten Inverter-Bausteinen 3, die sich selbst miteinander synchronisieren und deren Ausgangs-Transformatorwicklungen mit der Kapazität der Elektrolumineszenz-Leuchteinrichtung einen Schwingkreis bilden, der an den Anschlüssen EL₁ und EL₂ eine gut sinusförmige Wechselspannung von etwa 90 bis 100 Volt und mit einer Frequenz von etwa 400 Hz zur Verfügung stellt.

Der steuerbare elektronische Schalter 2 besteht im wesentlichen aus einem in der V⁺-Leitung liegenden Längstransistor 4, und einem von den Widerständen 7, 8 gebildeten Spannungsteiler, der zwischen V⁺ und dem Steuereingang 6 liegt, wobei die Basis des Längstransistors 4 mit dem Verbindungspunkt der beiden Widerstände 7, 8 verbunden ist. Der Längstransistor 4 führt die am Versorgungsanschluß 5 liegende Versorgungsspannung V⁺ dann an den Versorgungseingang der Zerhackerschaltung 1, wenn durch ein von außen kommendes Schaltsignal der Steuereingang 6 mi der Masse verbunden wird. Parallel zu dem mit V⁺ verbundenen Widerstand 7 liegt ein Schutzkondensator 9, während parallel zur Zerhackerschaltung 1 ein Stützkondensator 10 für die Wandler angeordnet ist.

Weiterhin ist eine Diagnoseschaltung 11 vorgesehen, die einen Meßwiderstand 12 umfaßt, der im Wechselspannungs-Ausgangskreis der Zerhackerschaltung 1 mit der Elektrolumineszenz-Leuchteinrichtung in Reihe liegt, sodaß an ihm eine dem Strom durch die Elektrolumineszenz-Leuchteinrichtung entsprechende Spannung abfällt.

Diese Spannung, bei der es sich dann, wenn die Elektrolumineszenz-Leuchteinrichtung ordnungsgemäß arbeitet, um eine Wechselspannung handelt, wird über einen Koppelkondensator 13 einem Gleichrichter 14 zugeführt, der aus den Dioden 15, 16 und einem Glättungskondensartor 17 besteht.

Die Ausgangs-Gleichspannung des Gleichrichters 14 wird über einen von zwei Widerständen 19, 20 gebildeten Spannungsteiler dem Eingang eines Schaltverstärkers 22 zugeführt, der im wesentlichen aus einem Ausgangstransistor 23 mit offenem Kollektor besteht, der den Diagnoseausgang 25 der Diagnoseschaltung 11 ansteuert und durch eine Zenerdiode 27 gegen Überspannungen geschützt ist. Dieser Diagnoseausgang ist extern über einen Widerstand mit der Versorgungsspannung V⁺ verbunden.

Die Diagnoseschaltung arbeitet in folgender Weise:

Ist das Vorschaltgerät ausgeschaltet weil der Steuereingang 6 floatet oder auf V⁺ gezogen ist, so fließt auch durch den Meßwiderstand 12 kein Strom und der Ausgangstransistor 23 des Schaltverstärkers 22 ist gesperrt, sodaß am Diagnoseausgang 25 die dem Logikpegel "EINS" entsprechende Spannung V⁺ erscheint.

Ist das Vorschaltgerät eingeschaltet, weil der Steuereingang 6 auf Masse gezogen ist, so fällt dann, wenn die Schaltungsanordnung und insbesondere die Elektrolumineszenz-Leuchteinrichtung einwandfrei arbeitet, am Meßwiderstand 12 eine mittlere Wechselspannung ab, die über den Kondensator 13 ausgekoppelt, durch den Gleichrichter 14 gleichgerichtet und dem Schaltverstärker 22 zugeführt wird, sodaß dessen Ausgangstransistor 23 durchgesteuert wird und am Diagnoseausgang 25 eine Spannung von etwa 0 Volt erscheint, die dem Logikpegel "NULL" entspricht.

Ist dagegen bei eingeschaltetem Vorschaltgerät der Stromfluß durch die Elektrolumineszenz-Leuchteinrichtung unterbrochen, so fließt auch durch den Meßwiderstand 12 kein Strom und am Diagnoseausgang 25 erscheint die Spannung V⁺ so, als ob das Vorschaltgerät nicht eingeschaltet wäre.

Ein weiterer Störfall kann darin bestehen, daß bei eingeschaltetem Vorschaltgerät im Stromkreis der Elektrolumineszenz-Leuchteinrichtung ein Kurzschluß auftritt. In diesem Fall bricht die Schwingung des von den zueinander parallelen Wicklungen der Inverter 3 und der Kapazität der Elektrolumineszenz-Leuchteinrichtung gebildeten Schwingkreises ab und es fließt durch den Meßwiderstand 12 ein vergleichsweise hoher Kurzschluß-Strom, bei dem es sich aber um einen reinen Gleichstrom handelt. Daher findet keine Auskoppelung der am Meßwiderstand 12 abfallenden Spannung über den Kondensator 13 statt, sodaß die Ausgangsspannung des Gleichrichters 14 niedrig ist, der Ausgangstransistor 23 des Schaltverstärkers 22 gesperrt wird und am Diagnoseausgang 25 die Spannung V⁺ so erscheint, als ob das Vorschaltgerät nicht eingeschaltet wäre.

Da der Steuerung der Bordelektronik eines Kraftfahrzeuges jederzeit bekannt ist, welches Schaltsignal sie momentan an den Steuereingang 6 des Vorschaltgerätes angelegt hat, kann sie durch eine Kombination dieser Information mit dem am Diagnoseausgang 25 vorhandenen Logikpegel erkennen, ob das Vorschaltgerät und die Elektrolumineszenz-Leuchteinrichtung einwandfrei arbeiten oder ob ein Störfall in Form einer Unterbrechung oder eines Kurzschlußes im Stromkreis der Elektrolumineszenz-Leuchteinrichtung vorliegt, da am Diagnoseausgang 25 nur dann ein Logikpegel "EINS" auftreten darf, wenn das Vorschaltgerät ausgeschaltet ist. Bei eingeschaltetem Vorschaltgerät kennzeichnet dieser Logikpegel einen Störfall der oben erwähnten Art, während ein Logikpegel "NULL" das einwandfreie Funktionieren der Schaltungsanordnung und der Elektrolumineszenz-Leuchteinrichtung kennzeichnet.

Eine Differenzierung zwischen den beiden Störfällen "Kurzschluß" und "Unterbrechung" ist bei dieser Ausführungsform einer erfindungsgemäßen Diagnoseschaltung ohne zusätzliche Maßnahmen nicht möglich. Da sich diese beiden Störungen aber sehr deutlich durch die jeweilige Stromaufnahme des Vorschaltgerätes am Versorgungsanschluß 5 unterscheiden, kann hier gewünschten Falls ebenfalls ein Strom-Meßwiderstand angeordnet und aus der an ihm abfallenden Spannung ein weiteres Diagnose-Ausgangssignal abgeleitet werden. Eine oberhalb eines durch die Größe dieses Strom-Meßwiderstandes vorgebbaren Schwellenwertes liegende Spannung ist dann in Verbindung mit dem Ausgangssignal "EINS" am Diagnoseausgang 25 für einen Kurzschluß kennzeichnend, bei dem der Eingangsstrom bei einer Versorgungsspannung von 12 V etwa 1 A beträgt. Umgekehrt kennzeichnet bei eingeschaltetem Vorschaltgerät eine unterhalb des genannten Schwellenwertes liegende Spannung in Verbindung mit dem Ausgangssignal "EINS" am Diagnoseausgang 25 eine Unterbrechung im Stromkreis der Elektrolumineszenz-Leuchteinrichtung. In diesem Fall beträgt der Eingangsstrom etwa 135 mA.

## Patentansprüche

1. Elektronisches Vorschaltgerät zur Erzeugung der für die Versorgung einer Elektrolumineszenz-Leuchteinrichtung erforderlichen Wechselspannung aus einer Versorgungs-Gleichspannung, insbesondere zur Beleuchtung eines Kraftfahrzeug-Kennzeichenschildes,
**dadurch gekennzeichnet,**
**daß** das Vorschaltgerät eine Diagnoseschaltung (11) unmfaßt, die wenigstens einen Diagnoseausgang (25) besitzt, an dem sie ein den momentanen Betriebszustand der Elektrolumineszenz-Leuchteinrichtung kennzeichnendes Diagnosesignal für eine weitere Verarbeitung zur Verfügung stellt.

2. Elektronisches Vorschaltgerät nach Anspruch 1, **dadurch gekennzeichnet, daß** das Diagnosesignal ein Digitalsignal ist, dessen einer Pegel (NULL) das einwandfreie Arbeiten der Elektrolumineszenz-Leuchteinrichtung kennzeichnet, während der andere Pegel (EINS) für wenigstens eine Fehlfunktion kennzeichnend ist.

3. Elektronisches Vorschaltgerät nach Anspruch 2, **dadurch gekennzeichnet, daß** die wenigstens eine Fehlfunktion eine Unterbrechung des durch die Elektrolumineszenz-Leuchteinrichtung fließenden Stromes ist.

4. Elektronisches Vorschaltgerät nach Anspruch 2 oder 3, **dadurch gekennzeichnet, daß** die wenigstens eine Fehlfunktion ein Kurzschluß im Bereich der Elektrolumineszenz-Leuchteinrichtung ist.

5. Elektronisches Vorschaltgerät nach einem der vorhergehenden Ansprüche, **dadurch gekennzeichnet, daß** die Diagnoseschaltung (11) mehrere Diagnoseausgänge besitzt, an denen jeweils ein Diagnosesignal erscheint, wobei die unterschiedlichen Kombinationen von Diagnosesignalen für unterschiedliche Betriebszustände und/oder Fehlfunktionen kennzeichnend sind.

6. Elektronisches Vorschaltgerät nach Anspruch 5, **dadurch gekennzeichnet, daß** ein erstes Diagnosesigal die Größe der Stromaufnahme des Vorschaltgerätes und ein zweites Diagnosesigal die Größe und Art des tatsächlich durch die Elektrolumineszenz-Leuchteinrichtung fließenden Stroms kennzeichnet.

7. Elektronisches Vorschaltgerät nach einem der vorhergehenden Ansprüche, **dadurch gekennzeichnet, daß** es eine Zerhackerschaltung (1) umfaßt, die aus der Versorgungs-Gleichspannung (V⁺) die für den Betrieb der Elektrolumineszenz-Leuchteinrichtung erforderliche Wechselspannung erzeugt, und daß die Diagnoseschaltung (11) folgende Bestandteile aufweist:
einen Strom-Meßwiderstand (12), der mit der Elektrolumineszenz-Leuchteinrichtung in Reihe geschaltet ist,
einen Gleichrichter (14), dessen Eingang über einen Koppelkondensator (13) mit dem Strom-Meßwiderstand (12) verbunden ist, sodaß er die an diesem abfallende Wechselspannung gleichrichtet,
einen Schaltverstärker (22) an dessen Eingang das Ausgangssignal des Gleichrichters (14) anliegt und der an dem wenigstens einen Diagnoseausgang (25) einen vorgebbaren Logik-Pegel erzeugt, wenn das Ausgangssignal des Gleichrichters (14) einen vorgebbaren Schwellenwert übersteigt.

8. Elektronisches Vorschaltgerät nach einem der vorhergehenden Ansprüche, **dadurch gekennzeichnet, daß** es mit Hilfe eines steuerbaren elektronischen Schalters (2) ein- und ausschaltbar ist.

9. Elektronisches Vorschaltgerät nach einem der vorhergehenden Ansprüche, **dadurch gekennzeichnet**, das die Diagnoseschaltung eine Schaltungsanordnung zum Messen des vom Vorschaltgerät aufgenommenen Eingangsstromes umfaßt, die dann, wenn dieser Eingangsstrom einen vorgebbaren Schwellenwert übersteigt, an einem Diagnoseausgang einen vorgebbaren Logik-Pegel erzeugt.
